# DEMANDE DE BREVET EUROPEEN

(11) **EP 0 814 004 A1**
(43) Date de publication de la demande: **29.12.1997**
(21) Numéro de dépôt: 97401439.1
(22) Date de dépôt: 20.06.1997
(51) Int. Cl.: B60S 1/34

(54) **Bague d'étanchéité d'un arbre d'entraînement d'essuie-vitre**

(30) Priorité: 21.06.1996 FR 9607732
(71) Demandeur: Renault, 92109 Boulogne Billancourt (FR)
(72) Inventeur: Godard, Michel, 78410 Aubergenville (FR)

(57) **Abrégé**

La présente invention concerne une bague (6) d'étanchéité montée entre un arbre (1) d'entraînement d'un bras (2) d'essuie-vitre et le rebord d'un trou de passage (3a) prévu, dans une grille d'auvent (3), pour le passage dudit arbre (1), caractérisée en ce qu'elle est constituée d'une rondelle inférieure (7) et d'une rondelle supérieure (8) prenant appui respectivement sur la face inférieure (3b) et supérieure (3c) du rebord du trou de passage (3a), les deux rondelles (7,8) ayant une circonférence extérieure de diamètre supérieur à celui dudit trou de passage (3a) et étant solidarisées l'une à l'autre par l'intermédiaire d'un manchon (7b,7c) entourant l'arbre (1), ledit manchon (7b,7c) ayant, au niveau du rebord du trou de passage (3a), un diamètre extérieur inférieur à celui dudit trou de passage (3a).

## Description

L'invention concerne une bague procurant l'étanchéité entre un arbre d'entraînement d'essuie-vitre et la grille d'auvent d'un véhicule. On appelle grille d'auvent la pièce, généralement en matière plastique, assurant la continuité entre le bord inférieur du pare-brise et l'extrémité supérieure du capot. Cette grille d'auvent se présente sous la forme d'une paroi continue percée de trous destinés au passage du ou des arbres d'entraînement des bras d'essuie-vitre. Cette paroi comporte généralement, outre lesdits trous, des ouïes d'aération destinées à la ventilation du véhicule ainsi qu'une gouttière permettant l'évacuation de l'eau de pluie sur les côtés du véhicule.

Les trous de passage des arbres d'entraînement étant largement dimensionnés de manière à faciliter le montage de la grille d'auvent autour desdits arbres, il est connu d'assurer l'étanchéité en introduisant préalablement audit montage, une bague en forme de couronne emboîtée autour de l'arbre et montée à force, par exemple sur le boulon servant au blocage dudit arbre. Cette bague, qui est donc fixe par rapport à la caisse du véhicule, remonte le long de l'arbre par sa circonférence interne en forme de collerette qui vient procurer un contact glissant avec ledit arbre. La circonférence externe de la bague remonte également pour constituer une collerette de plus grand diamètre qui vient en contact avec la surface inférieure de la grille d'auvent constituant la périphérie du trou de passage, assurant ainsi l'étanchéité. Cette solution présente de nombreux inconvénients : la cuvette créée par le volume situé sous la surface de la grille d'auvent, entre les collerettes interne et externe de la bague, a tendance à se remplir d'eau ce qui facilite les infiltrations entre l'arbre et la collerette interne ; la dispersion des jeux axiaux le long de l'arbre peut faire que la collerette externe de la bague ne soit pas en contact avec la surface inférieure de la grille d'auvent, détruisant ainsi l'étanchéité ; le trou de passage de l'arbre, largement dimensionné, reste apparent, ce qui entraîne une mauvaise qualité de l'aspect, en particulier lorsque l'arbre est mal centré dans son trou de passage ; enfin, cette solution entraîne, en chaîne, une opération de montage en deux temps, puisqu'il est nécessaire de monter successivement la bague puis la grille d'auvent.

Le dispositif selon l'invention vise à palier cet inconvénient. A cet effet, l'invention concerne une bague d'étanchéité montée entre un arbre d'entraînement d'un bras d'essuie-vitre et le rebord d'un trou de passage prévu, dans une grille d'auvent, pour le passage dudit arbre. Cette bague est caractérisée en ce qu'elle est constituée d'une rondelle inférieure et d'une rondelle supérieure prenant appui respectivement sur la face inférieure et supérieure du rebord du trou de passage, les deux rondelles ayant une circonférence extérieure de diamètre supérieur à celui dudit trou de passage et étant solidarisées l'une à l'autre par l'intermédiaire d'un manchon entourant l'arbre, ledit manchon ayant, au niveau du rebord du trou de passage, un diamètre extérieur inférieur à celui dudit trou de passage.

La bague selon l'invention permet d'assurer l'étanchéité tout en procurant un aspect satisfaisant puisque la rondelle supérieure masque totalement le trou de passage de l'arbre, et par conséquent une éventuelle excentricité dudit arbre au sein dudit trou. La bague est montée sur la grille d'auvent préalablement au montage de cette dernière sur le véhicule, ce qui facilite les manipulations. Le positionnement de l'arbre dans la bague est rendu possible par le fait que ladite bague est montée à translation radiale dans le trou de passage.

Selon une autre caractéristique de l'invention, le manchon est en une seule pièce avec la rondelle inférieure et sa section décroît au fur et à mesure que l'on s'éloigne de ladite rondelle inférieure.

Cette caractéristique permet d'assurer l'auto-centrage de la bague d'étanchéité autour de l'arbre lors du montage de la grille d'auvent sur le véhicule. Le fait que la rondelle inférieure soit en une pièce avec le manchon permet d'éviter l'éjection de la bague sous l'effet de la force exercée sur elle par l'arbre lors de l'opération d'auto-centrage.

Selon une autre caractéristique de l'invention, la rondelle inférieure est constituée d'une couronne dont les circonférences extérieure et intérieure possèdent des diamètres respectivement supérieur et inférieur à celui du trou de passage, le manchon prolongeant vers le haut la circonférence intérieure et se terminant par une collerette.

Selon une autre caractéristique de l'invention, le diamètre de la circonférence intérieure de la rondelle supérieure est inférieur à celui de la collerette de manière à pouvoir venir se clipser sur ladite collerette.

Selon une autre caractéristique de l'invention, la rondelle supérieure est bombée de manière à ce que sa circonférence intérieure soit située au dessus de sa circonférence extérieure.

Ces caractéristiques permettent de solidariser simplement les deux rondelles entre elles, par clipsage.

Selon une autre caractéristique de l'invention, le manchon de la rondelle inférieure est constitué d'une partie tronconique reliée à la collerette par une partie cylindrique.

Cette caractéristique permet d'assurer à la fois, par sa partie tronconique, l'auto-centrage de la bague sur l'arbre au cours du montage de la grille d'auvent tout en procurant, par sa partie cylindrique, une bonne étanchéité entre ladite bague et ledit arbre.

Selon une autre caractéristique de l'invention, la rondelle inférieure est en matière rigide et la rondelle supérieure en matière souple.

La rigidité de la rondelle inférieure améliore l'auto-centrage, alors que la souplesse de la rondelle supérieure facilite le clipsage.

D'autres caractéristiques et avantages apparaîtront à la lecture de la description d'un exemple de dispositif selon l'invention, en référence aux dessins dans lesquels :
- la figure 1 est une vue en plan de la traversée de la grille d'auvent par l'arbre d'entraînement du bras d'essuie-vitre, équipée de la bague d'étanchéité selon l'invention,
- la figure 2 est une en coupe selon la ligne II-II de la figure 1,
- la figure 3 est une vue en perspective éclatée de la bague d'étanchéité selon l'invention.

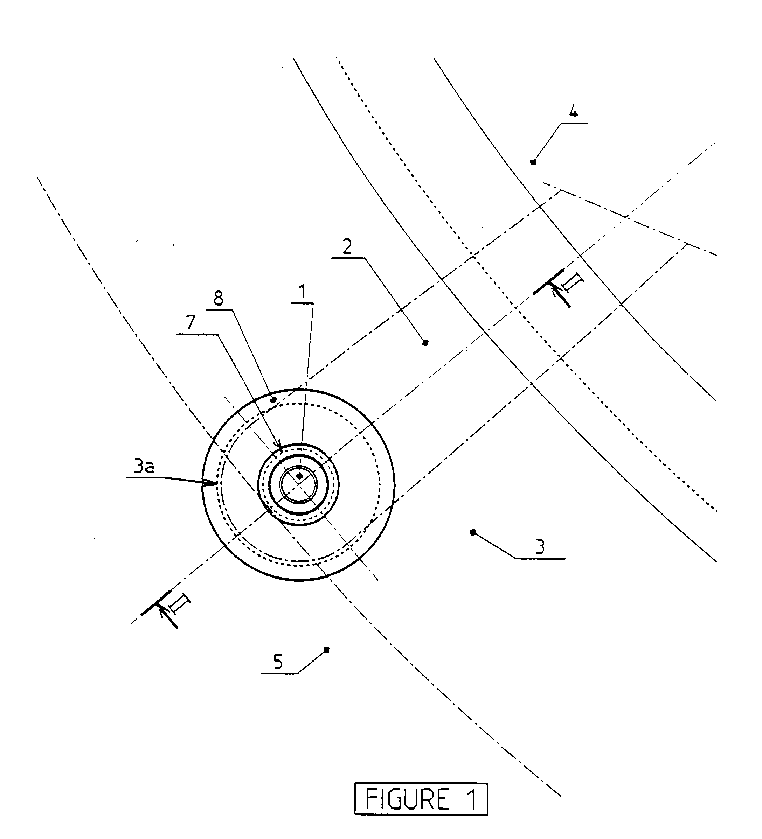

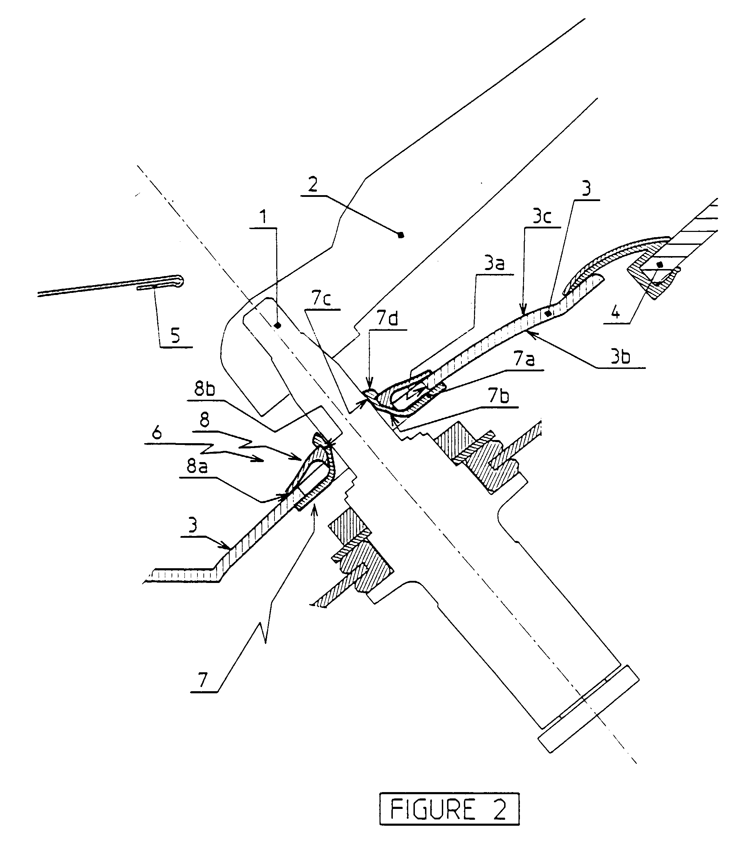

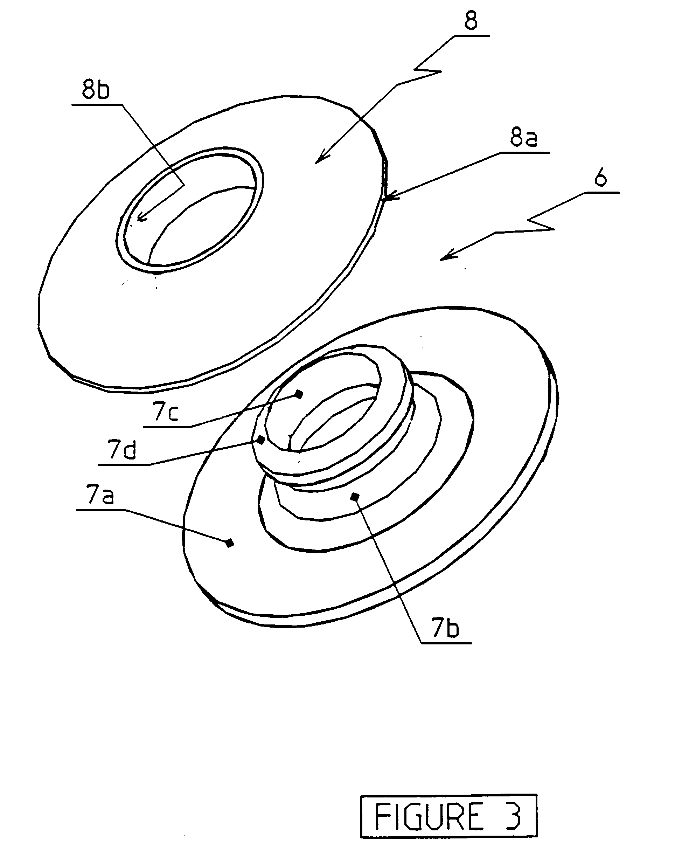

La figure 1 représente un arbre 1 entraînant un bras 2 d'essuie-vitre. La grille d'auvent 3, qui assure la continuité entre le pare-brise 4 et le capot 5, présente dans sa partie supérieure, un trou de passage 3a destiné au passage de l'arbre 1. Conformément à l'invention, l'étanchéité entre l'arbre 1 et le trou de passage 3a est assurée par une bague 6 en deux parties, une rondelle inférieure 7 et une rondelle supérieure 8, comme il est représenté sur la figure 2. La rondelle inférieure 7 est constituée d'une couronne7a dont la circonférence extérieure possède un diamètre supérieur à celui du trou de passage 3a. Cette couronne 7a est destinée à venir en appui sur la face inférieure 3b de la périphérie du trou de passage 3a. Sa circonférence intérieure se prolonge vers le haut par un manchon de section décroissante. Le manchon est réalisé de manière à ce que son diamètre situé dans le plan du trou de passage 3a, c'est à dire au niveau de la grille d'auvent 3, soit inférieur au diamètre dudit trou de passage 3a. Le manchon sera par exemple constitué d'une partie tronconique 7b, prolongée par une partie cylindrique7c elle-même terminée par une collerette 7d, comme il est représenté sur la figure 3. La rondelle supérieure 8 est bombée de manière à ce que sa circonférence intérieure 8b soit située au dessus de sa circonférence extérieure 8a. La rondelle supérieure 8 pourra par exemple être constituée d'une surface de révolution ouverte vers le haut selon une circonférence intérieure 8b de diamètre inférieur à celui de la collerette 7c de la rondelle inférieure 7 et ouverte vers le bas selon une circonférence extérieure 8a de diamètre supérieur à celui du trou de passage 3a. La rondelle supérieure 8 pourra par exemple être en forme d'une calotte sphérique dont la base correspond à la circonférence extérieure 8a et tronquée dans sa partie supérieure selon un plan parallèle à ladite base pour définir la circonférence intérieure 8b. Dans tous les cas, le montage s'effectue de la manière suivante. La rondelle inférieure 7 est présentée sur la face inférieure 3b de la grille d'auvent 3, au droit du trou de passage 3a, avec la collerette 7d de son manchon émergeant à travers le trou de passage 3a, au dessus de la grille d'auvent 3. La rondelle supérieure 8 est elle présentée sur la face supérieure de la grille d'auvent 3, au droit du trou de passage 3a, par sa circonférence extérieure 8a. Les deux rondelles 7, 8 sont alors rapprochées l'une de l'autre à travers le trou de passage 3a de la grille d'auvent 3 jusqu'à venir clipser la collerette 7d prolongeant la partie cylindrique 7c de la rondelle inférieure 7 dans la circonférence intérieure 8b de la rondelle supérieure 8. De manière à permettre ce clipsage, la rondelle supérieure 8 pourra, par exemple être réalisée en caoutchouc, alors que la rondelle inférieure 7 sera elle, par exemple, en matière plastique rigide. La bague 6 vient serrer la périphérie du trou de passage 3a d'une part, sur la face inférieure 3b de la grille d'auvent 3, par la couronne 7a de sa rondelle inférieure 7 et, d'autre part, sur la face supérieure 3c par la circonférence extérieure 8a de sa rondelle supérieure 8. Le fait que les parties tronconiques 7b et cylindriques 7c de la rondelle inférieure 7 soient de diamètre inférieur à celui du trou de passage 3a permet à la bague 6 de se déplacer en translation dans le plan de la grille d'auvent 3. Cette caractéristique permet un montage particulièrement avantageux de la bague 6. En effet, la bague 6 est montée sur la grille d'auvent 3 préalablement au montage de cette dernière sur le véhicule. La grille d'auvent équipée de sa bague 6 d'étanchéité est alors montée sur le véhicule. L'arbre 1, qui est alors dépourvu du bras d'essuie-vitre 2, vient se positionner à l'intérieur de la partie tronconique 7b de la rondelle inférieure 7. Cette partie tronconique 7b permet de tenir compte des dispersions de positionnement radial de l'arbre 2 et autorise la translation de la bague 6 par rapport à la grille d'auvent 3 permettant ainsi le rattrapage de l'excentricité éventuelle dudit arbre 1 dans le trou 3a. C'est pourquoi, il est nécessaire que le manchon soit solidaire de la rondelle inférieure 7 et que l'ensemble soit réalisé en une matière suffisamment rigide pour supporter la force exercée par l'arbre 1, lors du montage. Le serrage entre les deux rondelles 7, 8 est déterminé, par le dimensionnement des pièces et le choix des matériaux, de manière à ce que la bague 6 puisse se translater dans le plan du trou de passage 3a sous l'action de la force latérale exercée par l'arbre 1 lors du montage de la grille d'auvent 3, tout en assurant, une fois le montage terminé, un bonne étanchéité entre la bague 6 et ladite grille 3. A cet effet, la rondelle supérieure 8 pourra par exemple être réalisée en un matériau souple comme du caoutchouc. De même, le diamètre intérieur de la partie cylindrique 7c est choisi de manière à permettre la rotation de l'arbre 1 en son sein tout en assurant une bonne étanchéité. La bague 6 selon l'invention, en masquant entièrement le trou 3a permet de dissimuler l'éventuelle excentricité de l'arbre 2 au sein du trou de passage 3a.

Bien entendu, l'invention n'est nullement limitée au mode de réalisation décrit et illustré qui n'a été donné qu'à titre d'exemple. En particulier, toute bague d'étanchéité fixée sur la grille d'auvent préalablement au montage de celle-ci sur le véhicule, libre en translation à l'intérieur du trou de passage, ne sortirait pas du cadre de l'invention.

## Revendications

1. Bague (6) d'étanchéité montée entre un arbre (1) d'entraînement d'un bras (2) d'essuie-vitre et le rebord d'un trou de passage (3a) dudit arbre (1) prévu dans une grille d'auvent (3),), dans laquelle une rondelle inférieure (7) et une rondelle supérieure (8) prennent respectivement appui sur la face inférieure (3b) et supérieure (3c) du rebord du trou de passage (3a), et les deux rondelles (7,8) de ladite bague ayant une circonférence extérieure de diamètre supérieur à celui dudit trou de passage (3a) et étant solidarisées l'une à l'autre par l'intermédiaire d'un manchon (7b,7c) pour entourer l'arbre (1), et qui à, au niveau du rebord du trou de passage (3a), un diamètre extérieur inférieur à celui dudit trou de passage (3a), caractérisée en ce que le manchon de la rondelle inférieure (7) est constitué d'une partie tronconique (7b) reliée à une collerette (7d) par une partie cylindrique (7c) et que la rondelle supérieure (8) est bombée de manière à ce que sa circonférence intérieure (8b) soit située au dessus de sa circonférence extérieure (8a).

2. Bague selon la revendication 1, caractérisée en ce que la rondelle inférieure (7) est en matière rigide et la rondelle supérieure (8) en matière souple
